(19) Europäisches Patentamt
European Patent Office
Office européen des brevets

(11) EP 2 708 585 B1

(12) **EUROPEAN PATENT SPECIFICATION**

(45) Date of publication and mention
of the grant of the patent:
**03.01.2018 Bulletin 2018/01**

(21) Application number: **12782046.2**

(22) Date of filing: **10.05.2012**

(51) Int Cl.:
*B32B 27/00* (2006.01)       *B32B 27/32* (2006.01)
*C09J 4/02* (2006.01)        *C09J 11/06* (2006.01)
*C09J 133/00* (2006.01)      *C09J 133/08* (2006.01)
*C09J 133/06* (2006.01)      *C09J 4/00* (2006.01)

(86) International application number:
**PCT/JP2012/061954**

(87) International publication number:
**WO 2012/153795 (15.11.2012 Gazette 2012/46)**

(54) **METHOD FOR PRODUCING A DOUBLE-SIDED ADHESIVE TAPE**

VERFAHREN ZUR HERSTELLUNG EINES DOPPELSEITIGEN KLEBEBANDES

PROCÉDÉ POUR LA FABRICATION D'UNE BANDE ADHÉSIVE DOUBLE FACE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.05.2011 JP 2011104864**

(43) Date of publication of application:
**19.03.2014 Bulletin 2014/12**

(73) Proprietor: **Dexerials Corporation
Tokyo 141-0032 (JP)**

(72) Inventors:
• **ARAKI Noboru
Kanuma-shi, Tochigi 322-8502 (JP)**
• **ABE Tomoyuki
Kanuma-shi, Tochigi 322-8502 (JP)**
• **OGATA Takanori
Kanuma-shi, Tochigi 322-8502 (JP)**

(74) Representative: **Müller-Boré & Partner
Patentanwälte PartG mbB
Friedenheimer Brücke 21
80639 München (DE)**

(56) References cited:
**WO-A1-2012/049962       WO-A1-2012/049962
JP-A- 2001 049 200        JP-A- 2003 049 128
JP-A- 2003 049 130        JP-A- 2003 049 141
JP-A- 2004 244 589        JP-A- 2005 023 133
JP-A- 2010 260 880        US-A1- 2005 239 965
US-A1- 2009 229 733**

EP 2 708 585 B1

**Description**

The present invention relates to a method of producing a double-sided adhesive tape including acrylic-based adhesive layers formed by photopolymerization and provided on respective sides of a polyethylene foam substrate.

A double-sided adhesive tape including acrylic-based adhesive layers formed from a photocurable adhesive composition and provided on respective sides of a support such as a polyolefin film or an acrylic film is widely used for automobiles, electrical products, buildings, etc. to join structural materials to each other or to join a component to a structural material.

In one proposal to improve the acrylic-based adhesive layers constituting such a double-sided adhesive tape, a film obtained by photo-polymerizing a coating film of a solvent-free resin composition containing an acrylic-based monomer, an acrylate-based polymer having a weight average molecular weight of 100,000 to 200,000, a high-Tg low-molecular weight polymer having a weight average molecular weight of 20,000 or less and used to impart adhesion, a photopolymerization initiator, and a cross-linking agent is used to obtain acrylic-based adhesive layers having high adhesion properties such as adhesion and cohesion (Patent Literature 1).

As for improvement in the support constituting such a double-sided adhesive tape, an acrylic foam substrate is used as the support, in order to improve the X-Y directional conformability (i.e., adhesion to a curved surface) of the double-sided adhesive tape when flat materials with different linear expansion coefficients are bonded with the double-sided adhesive tape. However, in one proposal to further improve the X-Y directional conformability, a polyethylene foam substrate is used, which has slightly lower stretchability than that of the acrylic foam substrate but is less likely to undergo a creep phenomenon (Patent Literature 2).

Citation List

Patent Literature

   Patent Literature 1: Japanese Patent Application Laid-Open No. 2003-49130
   Patent Literature 2: Japanese Patent Application Laid-Open No. Hei. 6-49418

US 2009/229733 A1 discloses a double-sided pressure-sensitive adhesive sheet and a method for fixing a plastic film.

JP 2010 260880 A describes a double-sided adhesive tape.

However, to form an acrylic-based adhesive layer from the solvent-free resin composition in Patent Literature 1, it is premised that a cross-linking agent is added to the solvent-free resin composition in order to improve the mechanical properties of the acrylic-based adhesive layer. Therefore, a reduction in the flexibility of the acrylic-based adhesive layer and a reduction in its adhesion occur, causing a problem in that z-directional conformability (i.e., cleavage strength in a 90-degree cleavage test) is reduced when curved surfaces of two or more molded products are bonded or molding strain is cancelled.

To allow such a double-sided adhesive tape having acrylic-based adhesive layers to be adapted to different materials and surface conditions of various adherends, it is contemplated that an acrylic-based adhesive layer-forming resin composition containing no cross-linking agent is used to form the acrylic-based adhesive layers on the support. However, even in such a case, there is a need for the double-sided adhesive tape to exhibit favorable X-Y directional conformability and Z-directional conformability simultaneously.

When a polyethylene foam substrate is used as the substrate of a double-sided adhesive tape, the X-Y directional conformability of the double-sided adhesive tape can be improved as described above. However, since the stress relaxation properties of the adhesive are not sufficient, the double-sided adhesive tape has a problem in that improvement in Z-directional conformability is not sufficient.

It is an object of the present invention to solve the foregoing conventional problems. More specifically, it is an object to provide a method of producing a double-sided adhesive tape including photo-cured acrylic-based adhesive layers obtained by irradiating both sides of a polyethylene foam substrate with ultraviolet rays, the double-sided adhesive tape having favorable X-Y directional conformability and favorable Z-directional conformability even in the absence of a cross-linking agent.

The subject matter of the present invention is characterized in the claims.

The present inventors have found that, when the resin composition for forming the acrylic-based adhesive layers is formed from an acrylic-based polymer mixture of a relatively high-molecular weight acrylic-based polymer and a low-molecular weight acrylic-based polymer and an adhesion-imparting polymer having a lower molecular weight and the molecular weight distribution of the resin composition is controlled within a specific range, favorable Z-directional conformability can be imparted to the double-sided adhesive tape including the acrylic-based adhesive layers formed in the absence of a cross-linking agent. The inventors have also found that favorable X-Y directional conformability can be imparted to the double-sided adhesive tape when an electron beam cross-linked polyethylene foam substrate is used. In addition, the present inventors have found that the foregoing object can be achieved by the following. To prepare the above acrylic-based polymer mixture, first, an acrylic-based monomer composition containing a photopolymerization initiator is photo-polymerized to prepare a polymer syrup containing a relatively high-molecular weight acrylic-based polymer. A low-molecular weight adhesion-imparting polymer is added thereto, and a film is formed. Then the unreacted portion of the acrylic-based monomer remaining in the film is photo-polymerized into a relatively low-molecular weight acrylic-based polymer to thereby form an acrylic-based adhesive layer having a relatively broad molecular weight distribution. Thus, the present invention has been completed.

Disclosed is a double-sided adhesive tape comprising a polyethylene foam substrate and acrylic-based adhesive layers formed on respective sides of the polyethylene foam substrate, wherein

the polyethylene foam substrate has been subjected to electron beam cross-linking treatment,

the acrylic-based adhesive layers are formed from a cured resin composition formed by irradiating a solvent-free photopolymerizable monomer composition containing an acrylic-based monomer and a photopolymerization initiator with ultraviolet rays to photo-polymerize the acrylic-based monomer,

the cured resin composition contains an adhesion-imparting polymer having a weight average molecular weight of 2,000 to 10,000, an acrylic-based polymer A obtained by photopolymerization in the absence of a cross-linking agent and having a weight average molecular weight of 700,000 to 3,000,000, and an acrylic-based polymer B obtained by photopolymerization in the absence of a cross-linking agent and having a weight average molecular weight of 350,000 to 650,000, and

a molecular weight distribution of the cured resin composition measured by gel permeation chromatography using tetrahydrofuran is 2.4 to 4.4.

The present invention provides a method of producing a double-sided adhesive tape, the double-sided adhesive tape including a polyethylene foam substrate and acrylic-based adhesive layers formed on respective sides thereof, the method comprising the following steps (a) to (e):

Step (a)

a step of irradiating a solvent-free photopolymerizable monomer composition containing an acrylic-based monomer and a photopolymerization initiator with ultraviolet rays to produce an acrylic-based polymer A having a weight average molecular weight of 700,000 to 3,000,000 by photopolymerization of the acrylic-based monomer in the absence of a cross-linking agent, whereby a polymer syrup containing the acrylic-based polymer A and an unreacted portion of the acrylic-based monomer is prepared,

wherein ultraviolet irradiation conditions in the step (a) are such that ultraviolet irradiation is performed with rays at a wavelength of 250 to 400 nm applied at a power of 15 to 100 mW/cm$^2$ for 10 to 60 seconds in an inert gas atmosphere at a polymerization start temperature of 25 to 130°C, and is repeated 5 to 20 times at idling intervals of 20 to 40 seconds;

Step (b)

a step of mixing an adhesion-imparting polymer having a weight average molecular weight of 2,000 to 10,000 with the polymer syrup to prepare an adhesive coating solution;

Step (c)

a step of coating release film substrates with the adhesive coating solution to form adhesive coating films;

Step (d)

a step of irradiating the adhesive coating films with ultraviolet rays to produce an acrylic-based polymer B having a weight average molecular weight of 350,000 to 650,000 by photopolymerization of the unreacted portion of the acrylic-based monomer in the adhesive coating films in the absence of a cross-linking agent, whereby the acrylic-based adhesive layers are formed from a cured resin composition containing the acrylic-based polymer A, the acrylic-based polymer B, and the adhesion-imparting polymer, wherein a molecular weight distribution of the cured resin composition measured by gel permeation chromatography using tetrahydrofuran as an eluent is 2.4 to 4.4; and

Step (e)

a step of laminating the acrylic-based adhesive layers on the release film substrates to respective sides of an electron beam cross-linked polyethylene foam substrate;

wherein the weight average molecular weights are determined by gel permeation chromatography using tetrahydrofuran as an eluent.

Disclosed is a double-sided adhesive tape comprising a polyethylene foam substrate and acrylic-based adhesive layers formed on respective sides of the polyethylene foam substrate, wherein

the polyethylene foam substrate has been subjected to electron beam cross-linking treatment,

the acrylic-based adhesive layers are formed from a cured resin composition formed by irradiating a solvent-free photopolymerizable monomer composition containing an acrylic-based monomer and a photopolymerization initiator with ultraviolet rays to photo-polymerize the acrylic-based monomer,
the cured resin composition contains an adhesion-imparting polymer having a weight average molecular weight of 2,000 to 10,000, an acrylic-based polymer A obtained by photopolymerization in the absence of a cross-linking agent and having a weight average molecular weight of 700,000 to 3,000,000, and an acrylic-based polymer B obtained by photopolymerization in the absence of a cross-linking agent and in the presence of the adhesion-imparting polymer and the acrylic-based polymer A and having a weight average molecular weight of 350,000 to 650,000, and
a molecular weight distribution of the cured resin composition measured by gel permeation chromatography using tetrahydrofuran is 2.4 to 4.4.

Further disclosed is a double-sided adhesive tape comprising a polyethylene foam substrate and acrylic-based adhesive layers formed on respective sides of the polyethylene foam substrate, wherein
the polyethylene foam substrate has been subjected to electron beam cross-linking treatment,
the acrylic-based adhesive layers are formed from a cured resin composition formed by irradiating a solvent-free photopolymerizable monomer composition containing an acrylic-based monomer, a photopolymerization initiator, and a cross-linking agent with ultraviolet rays to photo-polymerize the acrylic-based monomer,
the cured resin composition contains an adhesion-imparting polymer having a weight average molecular weight of 2,000 to 10,000, an acrylic-based polymer A obtained by photopolymerization in the absence of the cross-linking agent and having a weight average molecular weight of 700,000 to 3,000,000, and an acrylic-based polymer B obtained by photopolymerization in the absence of the cross-linking agent and in the presence of the adhesion-imparting polymer and the acrylic-based polymer A and having a weight average molecular weight of 350,000 to 650,000, and
a molecular weight distribution of the cured resin composition measured by gel permeation chromatography using tetrahydrofuran is 2.4 to 4.4.

Advantageous Effects of Invention

In the double-sided adhesive tape disclosed herein, an electron beam cross-linked polyethylene foam substrate is used as the substrate. Therefore, even when the acrylic-based adhesive layers are formed in the absence of a cross-linking agent, favorable X-Y directional conformability can be imparted to the double-sided adhesive tape. In addition, the acrylic-based adhesive layers are formed from a cured resin composition formed by irradiating a solvent-free photopolymerizable monomer composition containing an acrylic-based monomer, a photopolymerization initiator, and a cross-linking agent with ultraviolet rays to photo-polymerize the acrylic-based monomer. The cured resin composition is composed of: an acrylic-based polymer mixture of a high-molecular weight acrylic-based polymer A obtained by photopolymerization in the absence of the cross-linking agent and having a weight average molecular weight of 700,000 to 3,000,000 and a low-molecular weight acrylic-based polymer B obtained by photopolymerization in the absence of the cross-linking agent and having a weight average molecular weight of 350,000 to 650,000; and a very low-molecular weight adhesion-imparting polymer having a weight average molecular weight of 2,000 to 10,000. Moreover, the molecular weight distribution of the cured resin composition measured by gel permeation chromatography using tetrahydrofuran is controlled within a specific range. Therefore, even when the acrylic-based adhesive layers are formed in the absence of the cross-linking agent, favorable Z-directional conformability can be imparted to the double-sided adhesive tape.

In the method of producing a double-sided adhesive tape according to the present invention, an acrylic-based monomer composition containing an acrylic-based monomer and a photopolymerization initiator is irradiated with ultraviolet rays to prepare a polymer syrup containing an acrylic-based polymer A obtained from the acrylic-based monomer by photopolymerization in the absence of a cross-linking agent and having a weight average molecular weight of 700,000 to 3,000,000. Then an adhesion-imparting polymer having a weight average molecular weight of 2,000 to 10,000 is added thereto, and the mixture is formed into films. The films are irradiated with ultraviolet rays to form an acrylic-based polymer B obtained from the remaining unreacted acrylic-based monomer by photopolymerization in the absence of a cross-linking agent and having a weight average molecular weight of 350,000 to 650,000, whereby acrylic-based adhesive layers having a relatively broad molecular weight distribution are formed. Then the acrylic-based adhesive layers are disposed on respective sides of an electron beam cross-linked polyethylene foam substrate. Therefore, favorable X-Y directional conformability and favorable Z-directional conformability can be imparted to the obtained double-sided adhesive tape even in the absence of a cross-linking agent.

In the double-sided adhesive tape disclosed herein, acrylic-based adhesive layers are formed on respective sides of an electron beam cross-linked polyethylene foam substrate.

The acrylic-based adhesive layers constituting the double-sided adhesive tape disclosed herein are formed from a cured resin composition formed by irradiating a solvent-free photopolymerizable monomer composition containing an acrylic-based monomer and a photopolymerization initiator with ultraviolet rays to photo-polymerize the acrylic-based monomer. The cured resin composition contains an acrylic-based polymer A obtained by photopolymerization in the absence of a cross-linking agent and having a weight average molecular weight of 700,000 to 3,000,000 and preferably 750,000 to 1,000,000, an acrylic-based polymer B obtained by photopolymerization in the absence of a cross-linking agent and having a weight average molecular weight of 350,000 to 650,000 and preferably 450,000 to 650,000, and an adhesion-imparting polymer having a weight average molecular weight of 2,000 to 10,000 and preferably 3,000 to 8,000. The molecular weight distribution of the cured resin composition measured by gel permeation chromatography using tetrahydrofuran is 2.4 to 4.4 and preferably 2.7 to 3.5. In the present description, the numerical values of the weight average molecular weights are also measured by gel permeation chromatography.

The chemical composition of the cured resin composition is defined as follows, in consideration of its preferable preparation process. The cured resin composition contains the adhesion-imparting polymer having a weight average molecular weight of 2,000 to 10,000, the acrylic-based polymer A obtained by photopolymerization in the absence of a cross-linking agent and having a weight average molecular weight of 700,000 to 3,000,000, and the acrylic-based polymer B obtained by photopolymerization in the absence of a cross-linking agent and in the presence of the adhesion-imparting polymer and the acrylic-based polymer A and having a weight average molecular weight of 350,000 to 650,000. The molecular weight distribution of the cured resin composition measured by gel permeation chromatography using tetrahydrofuran is 2.4 to 4.4.

The weight average molecular weight of the acrylic-based polymer A constituting the acrylic-based adhesive layers is 700,000 to 3,000,000, as described above. This is because, when the weight average molecular weight falls below the above range, the probability of a reduction in the holding power of the double-sided adhesive tape increases and because, when the weight average molecular weight falls above the above range, the probability of a reduction in peel characteristics under a constant load increases. If a specific acrylic-based monomer is selected, such probabilities are not required to be taken into consideration, but this is a rare case. As described later, when the solvent-free photopolymerizable monomer composition contains a cross-linking agent, the molecular weight distribution featuring the present invention can be easily achieved. Therefore, in consideration of the above probabilities, the weight average molecular weight of the acrylic-based polymer A is controlled within the range of 700,000 to 3,000,000.

The weight average molecular weight of the acrylic-based polymer B constituting the acrylic-based adhesive layers is 350,000 to 650,000, as described above. This is because, when the weight average molecular weight falls below the above range, the probability of a reduction in the adhesion of the double-sided adhesive tape to a curved surface increases and because, when the weight average molecular weight falls above the above range, the probability of a reduction in peel characteristics under a constant load increases.

It is difficult to measure the molecular weight of the acrylic-based polymer B alone. Thus, the molecular weight of the acrylic-based polymer B can be determined by subtracting the molecular weights of parts corresponding to the acrylic-based polymer A and the adhesion-imparting polymer from the overall molecular weight of the acrylic-based adhesive layers obtained by polymerizing the acrylic-based monomer described later in the presence of the acrylic-based polymer A and the adhesion-imparting polymer described later. More specifically, let the overall weight average molecular weight of the acrylic-based adhesive layers measured by gel permeation chromatography using tetrahydrofuran be Wt, the weight average molecular weight of the acrylic-based polymer A be Wa, and the weight average molecular weight of the adhesion-imparting polymer be Wc. Then the weight average molecular weight Wb of the acrylic-based polymer B can be determined by subtracting Wa and Wc from Wt. When Wc << Wt and Wa, Wc may be omitted to compute Wb.

The molecular weight distribution of the acrylic-based adhesive layers, i.e., the molecular weight distribution of the cured resin composition composed mainly of the acrylic-based polymer A, the adhesion-imparting polymer, and the acrylic-based polymer B as measured by gel permeation chromatography using tetrahydrofuran, is 2.4 to 4.4 when the cured resin composition is formed in the absence of a cross-linking agent. This is because, when the molecular weight distribution falls below the above range, the peel characteristics of the double-sided adhesive tape under a constant load tend to become low and because, when the molecular weight distribution falls above the above range, cohesion becomes excessively high and the probability of a reduction in tackiness increases.

Examples of the acrylic-based monomer constituting the solvent-free photo-polymerizable monomer composition for forming the acrylic-based polymers A and B include (meth)acrylic acid esters ((meth)acrylates) and (meth)acrylic acid. The term "(meth)acrylic acid" is meant to include "acrylic acid" and "methacrylic acid." Similarly, the term "(meth)acrylate" is meant to include "acrylate" and "methacrylate."

Examples of the (meth)acrylate used as a preferred acrylic-based monomer include: linear and branched alkyl (meth)acrylates such as methyl (meth)acrylate, ethyl (meth)acrylate, n- and iso-propyl (meth)acrylates, n-, iso-, and tert-butyl (meth)acrylates, pentyl (meth)acrylate, hexyl (meth)acrylate, and 2-ethylhexyl (meth)acrylate; cycloalkyl (meth)acrylates such as cyclohexyl (meth)acrylate; alkenyl (meth)acrylates such as allyl (meth)acrylate; aryl (meth)acrylates such as phenyl (meth)acrylate; aralkyl (meth)acrylates such as benzyl (meth)acrylate; and aryloxy alkyl (meth)acrylates such as phenoxy ethyl (meth)acrylate. A substituent such as a hydroxyl group or an alkoxy group may be bonded to the above (meth)acrylates.

An alkyl (meth)acrylate optionally substituted with a hydroxy group and (meth)acrylic acid are used in combination as preferred acrylic-based monomers. More specifically, 2-ethylhexyl acrylate, butyl acrylate, acrylic acid, and 2-hydroxyethyl acrylate are preferably used in combination. The amounts of these components mixed will next be described. If the ratio of 2-ethylhexyl acrylate mixed is too large, the 180 degree peel strength of the double-sided adhesive tape becomes high, but its peel characteristics under a constant load tend to become low. Therefore, the ratio of 2-ethylhexyl acrylate is preferably 25 to 35 parts by mass based on 100 parts by mass of the total of 2-ethylhexyl acrylate and butyl acrylate, and the ratio of butyl acrylate is preferably 75 to 65 parts by mass. If the ratio of acrylic acid mixed is too small, the holding power of the double-sided adhesive tape tends to become low. If the ratio is too large, the adhesion of the double-sided adhesive tape to a nonpolar resin tends to become low. Therefore, the amount of acrylic acid is preferably 1 to 10 parts by mass and more preferably 3 to 5 parts by mass based on 100 parts by mass of the total of 2-ethylhexyl acrylate and butyl acrylate. In the case in which a cross-linking agent is needed, if the ratio of 2-hydroxyethyl acrylate mixed is too small, the cross-linking density becomes low, and the holding power tends to become low. Therefore, the amount of 2-hydroxyethyl acrylate is preferably 0.2 to 0.5 parts by mass.

Any known chain transfer agent may be added to the solvent-free photopolymerizable monomer composition used in the present invention, in order to control the weight average molecular weight of a polymer to be produced. Examples of such a chain transfer agent include thiols, preferably alkyl thiols, and particularly preferably n-dodecyl mercaptan. The amount of the chain transfer agent added to the solvent-free photopolymerizable monomer composition is preferably 1 to 0.16 when the total amount of the photopolymerization initiator is taken as 1.

A general radical polymerization initiator or a general cationic photopolymerization initiator can be used as the photopolymerization initiator constituting the solvent-free photopolymerizable monomer composition. Examples of such photopolymerization initiators include: acetophenone-based photopolymerization initiators such as 4-(2-hydroxy-yethoxy)phenyl(2-hydroxy-2-propyl)ketone [DC(DAROCUR) 2959, Nihon Ciba-Geigy K.K.], $\alpha$-hydroxy-$\alpha,\alpha'$-dimethylac-etophenone [DC1173, Nihon Ciba-Geigy K.K.], methoxyacetophenone, 2,2-dimethoxy-2-phenylacetone [IRG(IRGACURE) 651, Nihon Ciba-Geigy K.K.], and 2-hydroxy-2-cyclohexylacetophenone [IRG-184, Nihon Ciba-Geigy K.K.]; ketal-based photopolymerization initiators such as benzyl dimethyl ketal; and other photopolymerization initiators such as halogenated ketones, acylphosphine oxides (for example, bis(2,4,6-trimethylbenzoyl)-phenylphosphine oxide [IRG819, Nihon Ciba-Geigy K.K.]), and acylphosphonate.

If the amount of the photopolymerization initiator added to the solvent-free photopolymerizable monomer composition is too small, the polymerization reaction tends not to proceed. If the amount is too large, the molecular weight of a polymer obtained by the polymerization reaction tends to become low. Therefore, the amount of the photopolymerization initiator is preferably 0.005 to 0.1 parts by mass based on 100 parts by mass of the acrylic-based monomer.

The reason that the weight average molecular weight of the adhesion-imparting polymer constituting the acrylic-based adhesive layers is set to 2,000 to 10,000 in the present invention is as follows. If the weight average molecular weight falls below the above range, the holding power of the acrylic double-sided adhesive tape tends to become low. If the weight average molecular weight falls above the above range, the compatibility of the adhesion-imparting polymer with the acrylic-based polymers A and B tends to become low, and stable adhesion is not obtained.

The adhesion-imparting polymer used may be any known adhesion-imparting polymer. Particularly, an acrylic-based adhesion-imparting polymer can be preferably used, from the viewpoint of compatibility with the acrylic-based polymers A and B used in combination with the adhesion-imparting polymer. Preferred examples of the acrylic-based adhesion-imparting polymer include a polymer produced by photopolymerization of a cycloalkyl (meth)acrylate, (meth)acrylic acid, a photopolymerization initiator, and a chain transfer agent such as a thiol, preferably an alkyl thiol. More specifically, such a polymer is produced by photopolymerization of cyclohexyl methacrylate, methacrylic acid, n-dodecyl mercaptan (a chain transfer agent), and a photopolymerization initiator. The amounts of these components mixed will next be described. If the ratio of cyclohexyl methacrylate mixed is too small, the adhesion of the double-sided adhesive tape to a nonpolar resin tends to become low. If the ratio is too large, the compatibility of the adhesion-imparting polymer with the acrylic-based polymers A and B tends to become low. On the premise of these tendencies, in the case in which a preferred amount of cyclohexyl methacrylate mixed is set to 95 to 97 parts by mass, if the ratio of methacrylic acid added is too small, the compatibility of the adhesion-imparting polymer with the acrylic-based polymers A and B tends to become low. If the ratio is too large, methacrylic acid tends to be selectively reacted to cause gelation. Therefore, the amount of methacrylic acid is preferably 3 to 5 parts by mass. If the ratio of n-dodecyl mercaptan mixed is too small, the molecular weight of the adhesion-imparting polymer tends to become excessively high. If the ratio is too large, the molecular weight tends to become excessively low. Therefore, the amount of n-dodecyl mercaptan is preferably 3 to 6 parts by mass. If the ratio of the added photopolymerization initiator, such as any of those described for step (a), is too small, the polymerization reaction tends not to proceed. If the ratio is too large, the molecular weight of the adhesion-imparting polymer tends to become low. Therefore, the amount of the photopolymerization initiator is preferably 0.25 to 0.5 parts by mass based on 100 parts by mass of the total of the monomers.

If the amount of the adhesion-imparting polymer added is too small, the double-sided adhesive tape tends to be hard to bond to a resin having low surface energy. If the amount is too large, the holding power of the double-sided adhesive tape tends to become low. Therefore, the amount of the adhesion-imparting polymer is preferably 10 to 30 parts by mass based on 100 parts by mass of the total of the monomer.

The solvent-free photopolymerizable monomer composition constituting the double-sided adhesive tape disclosed herein may contain a cross-linking agent that contributes to the initiation of a cross-linking reaction during photopolymerization by ultraviolet irradiation, in order to improve the holding power of the double-sided adhesive tape.

Therefore, when the cross-linking agent is added, the acrylic-based adhesive layers are formed from a cured resin composition formed by irradiating the solvent-free photopolymerizable monomer composition containing the acrylic-based monomer, the photopolymerization initiator, and the cross-linking agent with ultraviolet rays to photo-polymerize the acrylic-based monomer. The cured resin composition contains an adhesion-imparting polymer having a weight average molecular weight of 2,000 to 10,000, an acrylic-based polymer A obtained by photopolymerization in the absence of the cross-linking agent and having a weight average molecular weight of 700,000 to 3,000,000, and an acrylic-based polymer B obtained by photopolymerization in the absence of the cross-linking agent and in the presence of the adhesion-imparting polymer and the acrylic-based polymer A and having a weight average molecular weight of 350,000 to 650,000. The molecular weight distribution of the cured resin composition measured by gel permeation chromatography using tetrahydrofuran is 2.4 to 4.4.

When the molecular weight of the acrylic-based polymer A exceeds 1,000,000, the use of the cross-linking agent increases the cohesion of the acrylic-based adhesive layers but rather causes a reduction in peel characteristics under a constant load. Therefore, it is desirable to use the cross-linking agent in combination with the other components when the molecular weight of the acrylic-based polymer A is in the range of 700,000 to 1,000,000.

Examples of the cross-linking agent include compounds having an epoxy group (multifunctional epoxy compounds) and compounds having an isocyanate group (multifunctional isocyanate compounds). Specific examples of the compounds having an epoxy group include: bisphenol A type and epichlorohydrin-type epoxy resins; epoxy compounds such as ethylene glycidyl ether, polyethylene glycol diglycidyl ether, glycerin diglycidyl ether, glycerin triglycidyl ether, 1,6-hexanediol glycidyl ether, trimethylolpropane triglycidyl ether, diglycidylaniline, diamine glycidylamine, N,N,N',N'-tetraglycidyl-m-xylenediamine, and 1,3-bis(N,N'-diamineglycidylaminomethyl)cyclohexane;

specific examples of the compounds having an isocyanate compound include: isocyanate compounds such as tolylene diisocyanate, hexamethylene diisocyanate, isophorone diisocyanate, xylylene diisocyanate, hydrogenated xylylene diisocyanate, diphenylmethane diisocyanate, hydrogenated diphenylmethane diisocyanate, tetramethyl xylylene diisocyanate, naphthalene diisocyanate, triphenylmethane triisocyanate, and polymethylene polyphenyl isocyanate; and adducts of these isocyanate compounds and polyols such as trimethylolpropane.

In the case in which the cross-linking agent is used, if the amount of the cross-linking agent added to the solvent-free photopolymerizable monomer composition is too small, the polymerization reaction of the acrylic-based monomer tends not to proceed. If the amount is too large, the molecular weight of a polymer obtained by the polymerization reaction tends to become small. Therefore, the amount of the cross-linking agent is preferably 0.005 to 0.1 parts by mass based on 100 parts by mass of the acrylic-based monomer.

In the double-sided adhesive tape of the present invention, an electron beam cross-linked polyethylene foam substrate is used as the support for the acrylic-based adhesive layers. The reason that the electron beam cross-linked polyethylene foam substrate is used is that the polyethylene foam substrate is a material that inhibits the occurrence of creep phenomenon and that the fact where it has been subjected to electron beam cross linking treatment allows favorable X-Y directional conformability to be imparted to the double-sided adhesive tape even when no cross-linking agent is used for the acrylic-based adhesive layers.

The foaming state of the polyethylene foam substrate is preferably closed cell foam, from the viewpoint of achieving favorable flexibility and favorable resilience (elasticity). If the size of the air bubbles is too small, the flexibility tends to become low. If the size is too large, the resilience tends to become low. Therefore, the size of the air bubbles is preferably 10 to 300 $\mu$m and more preferably 30 to 300 $\mu$m. If the density of the polyethylene foam substrate is too low, a change in thickness tends to become large. If the density is too high, the flexibility tends to become low. Therefore, the density of the polyethylene foam substrate is preferably 0.01 to 0.4 g/cm$^3$ and more preferably 0.03 to 0.25 g/cm$^3$.

The electron beam cross-linking treatment on the polyethylene foam substrate will next be described. If the level of cross-linking treatment is too low, the resilience tends to become low. If the level is too high, the flexibility tends to become low. Therefore, the level of electron beam cross-linking treatment is preferably 1.0 to 5.0 Mrad and more preferably 1.7 to 3.4 Mrad.

If the thickness of the polyethylene foam substrate is too small, compressive force tends to become low. If the thickness is too large, the resilience tends to become low. Therefore, the thickness of the polyethylene foam substrate is preferably 0.1 to 5.0 mm and more preferably 0.3 to 5.0 mm.

The double-sided adhesive tape disclosed herein can be produced by a production method including the following steps (a) to (e). Each of the steps will next be described.

<Step (a) >

In this step, a polymer syrup is prepared. More specifically, the solvent-free photopolymerizable monomer composition containing the acrylic-based monomer and the photopolymerization initiator is irradiated with ultraviolet rays to produce the acrylic-based polymer A having a weight average molecular weight of 700,000 to 3,000,000 by photopolymerization of the acrylic-based monomer in the absence of a cross-linking agent. A polymer syrup containing the acrylic-based polymer A and the unreacted portion of the acrylic-based monomer is thereby prepared.

The polymer syrup, which is the target product prepared in this step, contains the unreacted acrylic-based monomer and the acrylic-based polymer A having a weight average molecular weight of 700,000 to 3,000,000 and preferably 750,000 to 1,000,000 when the polymer syrup is prepared in the absence of a cross-linking agent. When the polymer syrup is prepared in the presence of a cross-linking agent, a preferred weight average molecular weight of the acrylic-based polymer A is 750,000 to 1,000,000.

If the viscosity (25°C) of the polymer syrup (B-type viscometer, rotor No. 2, 25°C) is too low, it is difficult to maintain the thickness of an adhesive coating film in step (d). If the viscosity is too high, air is easily caught in the polymer syrup, and reaction inhibition tends to occur because of the influence of oxygen. Therefore, the viscosity is preferably 200 to 5,000 cps and more preferably 800 to 2,000 cps.

For the purpose of obtaining coating viscosity suitable for step (d), the ratio of the acrylic-based polymer A to the unreacted acrylic-based monomer present in the polymer syrup can be substituted by the polymerization rate of the solvent-free photopolymerizable monomer composition used for preparation of the polymer syrup. The polymerization rate is preferably 5 to 25% and more preferably 10 to 15%. This is because of the following reasons. If the polymerization rate is too low, the holding power of the double-sided adhesive tape and its adhesion to a curved surface tend to become low. If the polymerization rate is too high, the amount of the acrylic-based polymer B produced in step (d) decreases, and therefore the peel characteristics under a constant load tend to become deteriorated. The polymerization rate is computed as follows. 0.5 g of the polymer syrup is weighed, placed in a container reduced in pressure to 660 Pa, and left to stand at 120°C for 2 hours to volatilize volatile components. The resultant polymer syrup is weighed again to determine the amount of weight reduction. The amount of weight reduction is considered to be the amount of remaining monomer and oligomers, and the polymerization rate is determined using the following formula.

$$\texttt{Polymerization rate [\%] = [1 - (amount of weight reduction/weight of adhesive before volatilization treatment)] × 100}$$

In step (a), the solvent-free photopolymerizable monomer composition is irradiated with ultraviolet rays under stirring to perform the photopolymerization reaction. Ultraviolet irradiation conditions are as follows.
1) To prevent a chain transfer termination reaction due to oxygen during the photopolymerization reaction, the photopolymerization reaction is performed in an inert gas atmosphere such as the flow of nitrogen, argon gas, etc.
2) To obtain an appropriate reaction rate and to suppress the occurrence of a side reaction, the temperature during the photopolymerization reaction is preferably 25 to 130°C and preferably 40 to 120°C.
3) The wavelength of the ultraviolet rays used is 250 to 400 nm, which is the wavelength of light from a light source used for such photopolymerization (for example, an insect trapping lamp, a high pressure mercury lamp, or a black light).
4) To obtain an appropriate reaction rate and to suppress the occurrence of a side reaction, the output power of the ultraviolet rays is 15 to 100 mW/cm$^2$.
5) The irradiation with ultraviolet rays is performed intermittently, in order for the prepared polymer syrup to contain an appropriate amount of solids and to have an appropriate viscosity and an appropriate molecular weight. In this case, if the time of irradiation with ultraviolet rays is too short, the required energy is not obtained, so that the reaction does not proceed. If the time of irradiation is too long, the reaction proceeds at an accelerated pace. Therefore, the time of irradiation is 10 to 60 seconds, and the irradiation is performed 5 to 20 times at prescribed intervals (idling intervals of 20 to 40 seconds). The reason that the irradiation with ultraviolet rays is performed not continuously but intermittently is to prevent an excessive increase in polymerization reaction temperature. The reason that the idling intervals are set to 20 to 40 seconds is as follows. If the idling intervals are too short, an excessive increase in polymerization reaction temperature cannot be prevented. If the idling intervals are too long, the prescribed polymerization reaction temperature tends not to be maintained. In addition, the reason that the number of times of irradiation is set to 5 to 20 is that, if the number of times of irradiation is too small or large, a polymer syrup containing an appropriate amount of solids and having an appropriate viscosity and an appropriate molecular weight cannot be obtained.

<Step (b)>

In this step, an adhesive coating solution is prepared using the polymer syrup obtained in step (a). More specifically, the polymer syrup is mixed with an adhesion-imparting polymer having a weight average molecular weight of 2,000 to 10,000 and preferably 3,000 to 8,000 to prepare the adhesive coating solution.

If the viscosity (25°C) of the adhesive coating solution (B-type viscometer, rotor No. 2, 25°C) is too low, it is difficult to maintain the thickness of the adhesive coating film in step (d). If the viscosity is too high, air is easily caught, so that reaction inhibition tends to occur because of the influence of oxygen. Therefore, the viscosity is preferably 200 to 5,000 cps and more preferably 800 to 2,000 cps.

Preferred ultraviolet irradiation conditions for the photopolymerization reaction when the adhesion-imparting polymer used in step (b) is prepared may be the same as or different from those for the photopolymerization reaction in step (a). Representative conditions are as follows.

1) To prevent a chain transfer termination reaction due to oxygen during the photopolymerization reaction, the photopolymerization reaction is performed in an inert gas atmosphere such as the flow of nitrogen, argon gas, etc.
2) To obtain an appropriate reaction rate and to suppress the occurrence of a side reaction, the temperature during the photopolymerization reaction is preferably 25 to 130°C and more preferably 40 to 120°C.
3) The wavelength of the ultraviolet rays used is 250 to 400 nm, which is the wavelength of light from a light source used for such photopolymerization (for example, an insect trapping lamp, a high pressure mercury lamp, or a black light).
4) To obtain an appropriate reaction rate and to suppress the occurrence of a side reaction, the output power of the ultraviolet rays is preferably 15 to 100 mW/cm$^2$.
5) If necessary, the irradiation with ultraviolet rays is performed as separate operations, i.e., irradiation at low power for a relatively long time and irradiation at high power for a relatively short time.

<Step (c)>

In this step, an adhesive coating film is formed. More specifically, the adhesive coating solution obtained in step (b) is applied to a release film substrate to form the adhesive coating film.

The adhesive coating solution can be applied to the release film substrate using a known apparatus such as a doctor blade coater or a comma coater.

If the thickness of the adhesive coating film is too large, the ultraviolet rays do not reach a deep portion, and insufficient curing tends to occur. Therefore, the thickness is preferably less than 1.5 mm and more preferably less than 1.2 mm. The lower limit of the thickness can be appropriately determined according to the application purpose of the double-sided adhesive tape and is generally 0.015 to 0.02 mm.

The release film substrate used may be a release film substrate used for a conventional acrylic-based adhesive tape. Preferred examples of such a film include a polyethylene terephthalate film subjected to silicone release treatment. The release film substrate is removed before the double-sided adhesive tape is used.

After the adhesive coating solution is applied to the release film substrate, the applied adhesive coating solution may be covered with another release film substrate, and the product may be subjected to rolling to adjust the thickness. In this case, the release film substrate must be an ultraviolet transmitting substrate.

<Step (d)>

In this step, an acrylic-based adhesive layer is formed using the adhesive coating film formed in step (c). More specifically, the adhesive coating film is irradiated with ultraviolet rays to produce an acrylic-based polymer B having a weight average molecular weight of 350,000 to 650,000 by photopolymerization of the unreacted portion of the acrylic-based monomer in the adhesive coating film in the absence of a cross-linking agent. The acrylic-based adhesive layer is thereby formed from the cured resin composition containing the acrylic-based polymer A, the acrylic-based polymer B, and the adhesion-imparting polymer. The molecular weight distribution of the cured resin composition measured by gel permeation chromatography using tetrahydrofuran is 2.4 to 4.4. A transfer tape having the acrylic-based adhesive layer formed on the release film substrate is thereby obtained.

The reason that the weight average molecular weight of the acrylic-based polymer B prepared in this step is 350,000 to 650,000 and preferably 450,000 to 650,000 as described above may be as follows. In this step, the viscosity of the reaction system increases as the polymerization proceeds, so that the migration of molecules is highly restricted. In this case, even when the unreacted acrylic-based monomer is polymerized, the weight average molecular weight of the resultant polymer is not as large as that of the acrylic-based polymer A.

The phrase "the molecular weight distribution of the cured resin composition is 2.4 to 4.4" in this step means that the molecular weight distribution of the cured resin composition constituting the acrylic-based adhesive layer, i.e., the cured resin composition composed mainly of the acrylic-based polymer A, the adhesion-imparting polymer, and the acrylic-based polymer B, is 2.4 to 4.4.

The reason that the molecular weight distribution is set to 2.4 to 4.4 is as follows. If the molecular weight distribution falls below this range, the peel characteristics of the double-sided adhesive tape under a constant load become deteriorated. If the molecular weight distribution falls above this range, cohesion becomes excessively high, and the probability of a reduction in tackiness increases.

Preferred ultraviolet irradiation conditions for the photopolymerization reaction in this step (d) are different from those in steps (a) and (b). Specifically, ultraviolet irradiation is performed not intermittently but continuously to achieve a polymerization rate of 80% or higher. Representative conditions are as follows.

1) To prevent a chain transfer termination reaction due to oxygen during the photopolymerization reaction, the photopolymerization reaction is performed in an inert gas atmosphere such as the flow of nitrogen, argon gas, etc. Alternatively, the adhesive coating film is covered with a transparent release sheet formed from a polymer film such as a PET film subjected to release treatment on one side to block oxygen in the air, and then the photopolymerization reaction is performed.

2) To obtain an appropriate reaction rate and to suppress the occurrence of a side reaction, the temperature during the photopolymerization reaction is preferably 40 to 90°C.

3) The wavelength of the ultraviolet rays used is 250 to 400 nm, which is the wavelength of light from a light source used for such photopolymerization (for example, an insect trapping lamp, a high pressure mercury lamp, or a black light).

4) To obtain an appropriate reaction rate and to suppress the occurrence of a side reaction, the output power of the ultraviolet rays is preferably 15 to 100 mW/cm$^2$.

5) If the time of ultraviolet irradiation is too short, the required energy is not obtained, and the intended reaction does not proceed. If the time is too long, the reaction proceeds at an accelerated rate. Therefore, the time of ultraviolet irradiation is preferably 10 to 60 seconds.

<Step (e) >

Next, two transfer tapes are prepared, and the acrylic-based adhesive layers of the transfer tapes are applied to respective sides of an electron beam cross-linked polyethylene foam substrate, and pressure bonding is performed using, for example, a roller to laminate them. The double-sided adhesive tape of the present invention can thereby be obtained.

An example of the production method of the present invention in which no cross-linking agent is used has been described. However, in the present invention, a cross-linking agent may be added to the adhesive coating solution used in step (c) described above, in order to improve the holing power. The cross-linking agent may be added in step (b) or in step (c).

However, when the molecular weight of the acrylic-based polymer A exceeds 1,000,000, the use of the cross-linking agent increases the cohesion but rather cause a reduction in the peel characteristics under a constant load. Therefore, it is desirable to use the cross-linking agent when the molecular weight of the acrylic-based polymer A is in the range of 700,000 to 1,000,000.

Examples of the cross-linking agent include compounds having an epoxy group (multifunctional epoxy compounds) and compounds having an isocyanate group (multifunctional isocyanate compounds). Specific examples of the compounds having an epoxy group include: bisphenol A type and epichlorohydrin-type epoxy resins; epoxy compounds such as ethylene glycidyl ether, polyethylene glycol diglycidyl ether, glycerin diglycidyl ether, glycerin triglycidyl ether, 1,6-hexanediol glycidyl ether, trimethylolpropane triglycidyl ether, diglycidylaniline, diamine glycidylamine, N,N,N',N'-tetraglycidyl-m-xylenediamine, and 1,3-bis(N,N'-diamineglycidylaminomethyl)cyclohexane; specific examples of the compounds having an isocyanate compound include isocyanate compounds such as tolylene diisocyanate, hexamethylene diisocyanate, isophorone diisocyanate, xylylene diisocyanate, hydrogenated xylylene diisocyanate, diphenylmethane diisocyanate, hydrogenated diphenylmethane diisocyanate, tetramethyl xylylene diisocyanate, naphthalene diisocyanate, triphenylmethane triisocyanate, and polymethylene polyphenyl isocyanate; and adducts of these isocyanate compounds and polyols such as trimethylolpropane.

In the case in which the cross-linking agent is used, if the amount thereof in the adhesive coating solution is too small, the holding power of the double-sided adhesive tape tends to become low. If the amount is too large, the tackiness of the double-sided adhesive tape tends to decrease. Therefore, the amount of the cross-linking agent is preferably 0.5 to 3 parts by mass and more preferably 1.0 to 2.0 parts by mass based on 100 parts by mass of the total of the polymer syrup and the adhesion-imparting polymer.

The molecular weight distribution of the acrylic-based adhesive layers formed in the presence of the cross-linking agent may substantially coincide with the molecular weight distribution of the acrylic-based adhesive layers formed in the absence of the cross-linking agent (2.4 to 4.4) but may not coincide therewith because the cross-linking reaction due to the cross-linking agent occurs. For example, the molecular weight distribution may become narrow, i.e., be 2.2 to 2.8 and preferably 2.4 to 2.7.

Additives added to a general adhesive such as: fillers such as inorganic materials, for example, calcium carbonate, aluminum hydroxide, silica, clay, talc, and titanium oxide, inorganic hollow materials, for example, glass balloons, Shirasu balloons, and ceramic balloons, organic materials, for example, nylon beads, acrylic beads, and silicon beads, organic hollow materials, for example, vinylidene chloride balloons and acrylic balloons; a foaming agent; dyes; pigments; a polymerization inhibitor; and a stabilizer may be added to the adhesive coating solution so long as the effects of the present invention are not impaired.

The above-described double-sided adhesive tape disclosed herein can be used similar to conventional double-sided adhesive tapes. For example, I the acrylic-based adhesive layer on one side of the double-sided adhesive tape is bonded to an adherend, and the release film substrate on the other side is removed. Then another adherend is bonded to the exposed acrylic-based adhesive layer, whereby the two adherends can be integrated.

[Examples]

The present invention will next be specifically described by way of Examples.

Reference Examples 1 to 6 (Preparation of polymer syrups)

A 2L reaction vessel equipped with a nitrogen introduction tube, a stirrer, and a thermometer was charged with a mixture having a composition shown in TABLE 1. Nitrogen gas was introduced to the reaction vessel (nitrogen flow quantity: 300 mL, nitrogen purge time: 60 minutes), and the mixture was heated to a polymerization start temperature shown in TABLE 1 under stirring (150 rpm). Then ultraviolet rays (365 nm) were applied at a power of 40 mW/cm$^2$ for 10 seconds, and the mixture was left to stand for 40 seconds (idling interval). This irradiation-idling cycle was repeated the number of times shown in TABLE 1. A polymer syrup having a viscosity, polymerization rate, weight average molecular weight, and molecular weight distribution shown in TABLE 1 was thereby obtained. The obtained weight average molecular weight corresponds to that of the acrylic-based polymer A.

The viscosity was measured at 25°C using a B-type viscometer (manufactured by TOKYO KEIKI Inc.) equipped with rotor No. 2.

The polymerization rate was determined as follows. 0.5 g of a polymer syrup was weighed, placed in a container reduced in pressure to 660 Pa, and left to stand at 120°C for 2 hours to volatilize volatile components. The polymer syrup was again weighed to determine the amount of weight reduction. The amount of weight reduction was considered to be the amount of remaining monomer and oligomers, and the polymerization rate was determined using the following formula.

```
Polymerization rate % = [1 - (amount of weight

reduction / weight of adhesive before volatilization

treatment)] × 100
```

The weight average molecular weight and the molecular weight distribution were determined by gel permeation chromatography using tetrahydrofuran as an eluent (Shodex GPC SYSTEM-21, Showa Denko K.K.).

[TABLE 1]

| Component (g) | Reference Example | | | | | |
|---|---|---|---|---|---|---|
| | 1 | 2 | 3 | 4 | 5 | 6 |
| 2-Ethylhexyl acrylate | 300 | 300 | 300 | 300 | 300 | 300 |

(continued)

| Component (g) | Reference Example | | | | | |
|---|---|---|---|---|---|---|
| | 1 | 2 | 3 | 4 | 5 | 6 |
| Butyl acrylate | 700 | 700 | 700 | 700 | 700 | 700 |
| Acrylic acid | 50 | 50 | 50 | 50 | 50 | 50 |
| 2-Hydroxyethyl acrylate | 3 | 3 | 3 | 3 | 3 | 3 |
| 2-Hydroxy-2-methyl-1-phenylpropan-1-one | 0.6 | 0.6 | 0.6 | 0.6 | 0.6 | 0.6 |
| n-Dodecyl mercaptan | 1.0 | 0.6 | 0.2 | 0.2 | - | - |
| Polymerization start temperature (°C) | 95.0 | 85.0 | 85.0 | 75.0 | 85.0 | 70.0 |
| Number of times of UV irradiation | 15 | 18 | 15 | 15 | 9 | 7 |
| Viscosity [cps] (25°C) | 990 | 275 | 1325 | 1440 | 1330 | 2075 |
| Polymerization rate (%) | 30.9 | 15.5 | 18.1 | 16.2 | 11.3 | 7.8 |
| weight average molecular weight [$\times 10^4$] | 26 | 37 | 74 | 87 | 146 | 297 |
| Molecular weight distribution | 1.9 | 1.7 | 2.2 | 2.1 | 2.7 | 2.5 |

Reference Example 7 (Preparation of adhesion-imparting polymer)

A 2L reaction vessel equipped with a nitrogen introduction tube, a stirrer, and a thermometer was charged with 5820 g of cyclohexyl methacrylate (CHMA), 180 g of methacrylic acid, 20 g of 2-hydroxy-2-methyl-1-phenyl-propane-1-one (DC1173, Nihon Ciba-Geigy K.K.), and 240 g of n-dodecyl mercaptan. The reaction mixture was stirred (200 rpm) while nitrogen gas was introduced (nitrogen flow quantity: 6L, nitrogen purge time: 30 minutes) and then heated to 60.0°C. The reaction mixture was irradiated with ultraviolet rays (365 nm) at a power of 40 mW/cm$^2$ for 30 minutes and left to stand for about 10 minutes until the temperature of the heated reaction mixture reached 70.0°C. This irradiation-idling cycle was repeated three times to obtain an adhesion-imparting polymer solution. 500 g of the obtained adhesion-imparting polymer solution was transferred to a stainless steel container and irradiated with ultraviolet rays (365 nm) at a power of 90 mW/cm$^2$ for 3 minutes using a conveyer-type ultraviolet irradiation device ECS-151U manufactured by EYE GRAPHICS Co., Ltd. An adhesion-imparting polymer having a weight average molecular weight of 7,153 was thereby obtained.

Examples 1 to 4 and Comparative Examples 1 and 2

(Production of double-sided adhesive tapes in the absence of cross-linking agent)

100 g of the polymer syrup in one of Reference Examples 1 to 6 (R1 to R6), 20 g of the adhesion-imparting polymer in Reference Example 7, 6.67 g of t-butyl acrylate, 6.67 g of phenoxy ethyl acrylate, and 0.53 g of a photopolymerization initiator (a 4:1 (weight ratio) mixture of 2-hydroxy-2-methyl-1-phenyl-propane-1-one and bis(2,4,6-trimethylbenzoyl)-phenylphosphine oxide) were uniformly mixed to prepare an acrylic-based adhesive coating solution containing no cross-linking agent.

The obtained acrylic-based adhesive coating solution containing no cross-linking agent was applied to a 50 μm-thick polyethylene terephthalate film subjected to silicone release treatment to a thickness of 50 μm through an adhesive. Then another 50 μm-thick polyethylene terephthalate film subjected to silicone release treatment was placed thereon, and the resultant product was passed between a pair of rollers at a line speed of 5 m/minutes with the gap therebetween maintained at 0.05 mm. After passed between the rollers, the product was irradiated with ultraviolet rays (main wavelength: 352 nm) from an insect trapping fluorescent lamp at an output power of 2.0 mW/cm$^2$ for 60 seconds and then with ultraviolet rays (main wavelength: 365 nm) from a high-pressure mercury lamp at a power of 35.5 mW/cm$^2$ for 30 seconds. A transfer tape in which an acrylic-based adhesive layer obtained by photopolymerization and serving as a transfer layer was sandwiched between the release-treated polyethylene terephthalate films was thereby obtained.

Next, a 0.3 mm-thick polyethylene foam substrate subjected to electron beam cross-linking treatment (Volara XL-H, SEKISUI CHEMICAL Co., Ltd.) was prepared. The release films on one side of two transfer tapes were removed. The acrylic-based adhesive layer of one transfer film was laminated to one side of the polyethylene foam substrate, and the acrylic-based adhesive layer of the other transfer film was laminated to the other side of the polyethylene foam substrate. The lamination was performed under the conditions of 200 g/cm$^2$ and 65°C. A double-sided adhesive tape having the acrylic-based adhesive layers formed in the absence of a cross-linking agent was thereby obtained.

(Evaluation of double-sided adhesive tapes having acrylic-based adhesive layers containing no cross-linking agent)

For each of the obtained double-sided adhesive tapes, the weight average molecular weight of the acrylic-based adhesive layers (the molecular weight of a soluble adhesive component) and the molecular weight distribution thereof were measured using a gel permeation chromatograph (Shodex GPC SYSTEM-21, manufactured by Showa Denko K.K.) using tetrahydrofuran as an eluent. The weight average molecular weight of the acrylic-based polymer B was computed from the measurement results. The results obtained are shown in TABLE 2. The soluble adhesive component means a component capable of being eluted with the tetrahydrofuran eluent during analysis in the gel permeation chromatograph.

To evaluate the Z-directional conformability of each double-sided adhesive tape having the acrylic-based adhesive layers containing no cross-linking agent, 90-degree peel strength was measured as described below. The results obtained are shown in TABLE 2. The higher the peel strength is, the better the Z-directional conformability is.

<90-Degree cleavage test>

An adhesive tape with a width of 10 mm and a length of 50 mm was temporarily applied to an organic print-coated acrylic plate (3.0 mm thick, 50 mm square) along its one edge, and a release film was removed. Then an ABS plate (3.0 mm thick, 50 mm square) was placed on the acrylic plate along the one edge so as to cover only the entire area of the adhesive tape, and a 2-kg pressure roller was rolled back and forth one time over the product to laminate the plates. The ABS plate was secured with a clamp with the overlapping acrylic plate facing upward. Then an L-shaped hook was hooked onto an edge of the acrylic plate and pulled in a 90-degree direction at a speed of 300 mm/minute to measure peel strength (N/500 mm$^2$) using a tensile tester (TENSILON RTA-250, manufactured by ORIENTEC Co., Ltd.). The larger the numerical value of the peel strength is, the more preferred it is.

To evaluate the X-Y directional conformability of each double-sided adhesive tape having the acrylic-based adhesive layers containing no cross-linking agent, adhesion to a curved surface was measured as described below. The results obtained are shown in TABLE 2. The smaller the separation from an adherend such as an aluminum plate is, the more favorable the X-Y directional conformability is. It is practically preferable that no separation occur.

<Adhesion to curved surface>

An adhesive tape with a width of 20 mm and a length of 150 mm was temporarily applied to an aluminum plate (thickness: 0.5 mm, width: 20 mm, length: 150 mm), and a release film was removed. The aluminum plate was placed on the central portion of a 2 mm-thick polystyrene plate or a 2 mm-thick ABS (acrylonitrile-butadiene-styrene copolymer) plate (each having a width of 25 mm and a length of 200 mm) with 25-mm margins on both sides, and a roller with a self weight of 2 kg was rolled back and forth one time over the product to bond the plates. The resultant product was cured at room temperature for 24 hours, then bent such that the distance between the opposite ends was 190 mm with the aluminum plate facing up, and left to stand in a thermostatic bath at 60°C for 24 hours while the bent state was maintained. Then the distances (peel distances) between the surface of the polystyrene plate or the ABS plate and the ends of the aluminum plate separated therefrom were measured. The shorter the peel distances are, the more preferred it is.

Examples 5 to 8 and Comparative Examples 3 and 4 (production of double-sided adhesive tapes in the presence of cross-linking agent)

100 g of the polymer syrup in one of Reference Examples 1 to 6 (R1 to R6), 20 g of the adhesion-imparting polymer in Reference Example 7, 6.67 g of t-butyl acrylate, 6.67 g of phenoxy ethyl acrylate, 0.53 g of a photopolymerization initiator (a 4:1 (weight ratio) mixture of 2-hydroxy-2-methyl-1-phenyl-propane-1-one and bis(2,4,6-trimethylbenzoyl)-phenylphosphine oxide), and 1.78 g of a polyisocyanate-based cross-linking agent (CORONATE L, Nippon Polyurethane Industry Co., Ltd.) were uniformly mixed to prepare an ultraviolet curable acrylic-based adhesive coating solution containing the cross-linking agent.

The obtained ultraviolet curable acrylic-based adhesive coating solution was used to obtain transfer tapes in the same manner as in Example 1. In each transfer tape, an acrylic-based adhesive layer obtained by photopolymerization and serving as a transfer layer was sandwiched between release-treated polyethylene terephthalate films. Then the acrylic-based adhesive layers of the transfer tapes were transferred to respective sides of an electron beam cross-linked polyethylene foam substrate, whereby a double-sided adhesive tape having, on respective sides, the acrylic-based adhesive layers formed in the presence of the cross-linking agent was obtained.

(Evaluation of double-sided adhesive tapes having crosslinked and cured acrylic-based adhesive layers)

For each of the obtained double-sided adhesive tapes, the weight average molecular weight and molecular weight distribution of the acrylic-based adhesive layers were measured in the same manner as in Example 1. To evaluate the Z-directional conformability of each double-sided adhesive tape, a 90 degree cleavage test was performed in the same manner as in Example 1. To evaluate the X-Y directional conformability of each double-sided adhesive tape, the adhesion to a curved surface was tested and evaluated. The results obtained are shown in TABLE 3. It is practically preferable that the Z-directional conformability be 50 N/500 mm$^2$ or higher.

[TABLE 2]

| | | Comparative Example | | Example | | | |
|---|---|---|---|---|---|---|---|
| | | 1 | 2 | 1 | 2 | 3 | 4 |
| Polymer syrup | Type: R1 to R6 | R1 | R2 | R3 | R4 | R5 | R6 |
| | Weight average molecular weight [1 × 10$^4$] | 26 | 37 | 74 | 87 | 146 | 297 |
| | Molecular weight distribution | 1.9 | 1.7 | 2.2 | 2.1 | 2.7 | 2.5 |
| Acrylic-based adhesive layer (Soluble adhesive component) | Weight average molecular weight [1 × 10$^4$] | 28 | 34 | 52 | 48 | 61 | 65 |
| | Molecular weight distribution | 2.2 | 2.4 | 3.1 | 2.9 | 3.8 | 4.2 |
| <Z-directional conformability> 90-Degree peel strength from acrylic/ABS adherend [N/500 mm$^2$] | | 53.25 | 58.4 | 69.3 | 76.4 | 83.2 | 90.7 |
| <X-Y directional conformability> Adhesion to curve surface of ABS adherend [mm] | | 2.5 | 1.8 | 1.3 | 1.0 | 0.0 | 0.0 |

[TABLE 3]

| | | Comparative Example | | Example | | | |
|---|---|---|---|---|---|---|---|
| | | 3 | 4 | 5 | 6 | 7 | 8 |
| Polymer syrup | Type: R1 to R6 | R1 | R2 | R3 | R4 | R5 | R6 |
| | Weight average molecular weight [1 × 10$^4$] | 26 | 37 | 74 | 87 | 146 | 297 |
| | Molecular weight distribution | 1.9 | 1.7 | 2.2 | 2.1 | 2.7 | 2.5 |
| Acrylic-based adhesive layer (Soluble adhesive component) | Weight average molecular weight [1 × 10$^4$] | 64 | 59 | 36 | 39 | 35 | 39 |
| | Molecular weight distribution | 4.2 | 4.0 | 2.6 | 2.7 | 2.4 | 2.6 |
| <Z-directional conformability> 90-Degree peel strength from acrylic/ABS adherend [N/500 mm$^2$] | | 68.2 | 67.6 | 82.4 | 91.72 | 102.7 | 105.95 |

(continued)

| | Comparative Example | | Example | | | |
|---|---|---|---|---|---|---|
| | 3 | 4 | 5 | 6 | 7 | 8 |
| <X-Y directional conformability> Adhesion to curve surface of ABS adherend [mm] | 1.5 | 1.0 | 0.0 | 0.0 | 0.0 | 0.0 |

<Evaluation results>

(X-Y directional conformability)

In each of the double-sided adhesive tapes in Examples 1 to 8, the substrate used was an electron beam cross-linked polyethylene foam substrate, and the weight average molecular weight of the polymer syrup used (corresponding to the acrylic-based polymer A) was within the range of 700,000 to 3,000,000. In each of the double-sided adhesive tapes in Examples 1 to 4, the molecular weight distribution of the acrylic-based adhesive layers (the soluble adhesive component (corresponding to the acrylic-based polymer B)) formed in the absence of a cross-linking agent was between 2.4 to 4.4. In each of the double-sided adhesive tapes in Examples 5 to 8 having the same configuration as those of Examples 1 to 4 except that the adhesive layers were formed in the presence of the cross-linking agent, the molecular weight distribution was between 2.4 to 2.7. Therefore, these double-sided adhesive tapes also showed favorable X-Y directional conformability.

However, in the double-sided adhesive tape of Comparative Example 1 produced in the absence of a cross-linking agent, the weight average molecular weight of the polymer syrup used was much lower than 700,000. In addition, since the molecular weight distribution of the acrylic-based adhesive layers was lower than 2.4, i.e., was 2.2, the X-Y directional conformability was much lower than that of the double-sided adhesive tapes in Examples 1 to 4 formed in the absence of a cross-linking agent. In Comparative Example 2, although the molecular weight distribution of the acrylic-based adhesive layers was 2.4, the weight average molecular weight of the polymer syrup used was much lower than 700,000. Therefore, the X-Y directional conformability was improved as compared to that in Comparative Example 1 but was lower than that in Examples 1 to 4.

In the double-sided adhesive tape in Comparative Example 3 produced in the presence of a cross-linking agent, although the molecular weight distribution of the acrylic-based adhesive layers was 4.2, the weight average molecular weight of the polymer syrup used was much lower than 700,000. Therefore, the X-Y directional conformability was much lower than that in the double-sided adhesive tapes in Examples 5 to 8 produced in the presence of the cross-linking agent. Also in Comparative Example 4, although the molecular weight distribution of the acrylic-based adhesive layers was 4.0, the weight average molecular weight of the polymer syrup used was much lower than 700,000. Therefore, the X-Y directional conformability was improved as compared to that in Comparative Example 3 but was worse than that in Examples 5 to 8.

(Z-directional conformability)

(1) Evaluation of double-sided adhesive tapes having acrylic-based adhesive layers formed in the absence of a cross-linking agent

As can be seen from the results for Examples 1 to 4 and the results for Comparative Examples 1 and 2 in which the molecular weight of the acrylic-based polymer A was low (TABLE 2), the value of the Z-directional conformability of the double-sided adhesive tape having the acrylic-based adhesive layers formed in the absence of a cross-linking agent was improved as the weight average molecular weights of the acrylic-based polymers A and B increased. In addition, there was a tendency that the broader the molecular weight distribution is, the better the results obtained is.

(2) Evaluation of double-sided adhesive tapes having acrylic-based adhesive layers formed in the presence of a cross-linking agent

As can be seen from the results for Examples 5 to 8 and the results for Comparative Examples 3 and 4 in which the molecular weight of the acrylic-based polymer A was low, there was a tendency that the numerical value of the Z-directional conformability of the double-sided adhesive tape having the acrylic-based adhesive layers formed in the presence of the cross-linking agent was shifted in a favorable direction as the weight average molecular weight of the acrylic-based polymer A and the molecular weight distribution increased.

In the double-sided adhesive tape of the present invention, an electron beam cross-linked polyethylene foam substrate is used as the substrate. Therefore, even when the acrylic-based adhesive layers are formed in the absence of a cross-linking agent, favorable X-Y directional conformability can be achieved. In the double-sided adhesive tape of the present invention, the acrylic-based adhesive layers are formed from a composition containing an acrylic-based polymer mixture of a high-molecular weight acrylic-based polymer A having a weight average molecular weight of 700,000 to 3,000,000 and a low-molecular weight acrylic-based polymer B having a weight average molecular weight of 350,000 to 650,000 and further containing a very-low molecular weight adhesion-imparting polymer having a weight average molecular weight of 2,000 to 10,000. In addition, the molecular weight distribution is controlled to a specific value. Therefore, even in the absence of a cross-linking agent, favorable Z-directional conformability can be achieved. Accordingly, the double-sided adhesive tape of the present invention is useful for bonding of structural materials for automobiles, electrical products, buildings, etc.

## Claims

1. A method of producing a double-sided adhesive tape, the double-sided adhesive tape including a polyethylene foam substrate and acrylic-based adhesive layers formed on respective sides thereof, the method comprising the following steps (a) to (e):

   Step (a)
   a step of irradiating a solvent-free photopolymerizable monomer composition containing an acrylic-based monomer and a photopolymerization initiator with ultraviolet rays to produce an acrylic-based polymer A having a weight average molecular weight of 700,000 to 3,000,000, preferably 750,000 to 1,000,000, by photopolymerization of the acrylic-based monomer in the absence of a cross-linking agent, whereby a polymer syrup containing the acrylic-based polymer A and an unreacted portion of the acrylic-based monomer is prepared,
   wherein ultraviolet irradiation conditions in the step (a) are such that ultraviolet irradiation is performed with rays at a wavelength of 250 to 400 nm applied at a power of 15 to 100 mW/cm$^2$ for 10 to 60 seconds in an inert gas atmosphere at a polymerization start temperature of 25 to 130°C, and is repeated 5 to 20 times at idling intervals of 20 to 40 seconds;
   Step (b)
   a step of mixing an adhesion-imparting polymer having a weight average molecular weight of 2,000 to 10,000 with the polymer syrup to prepare an adhesive coating solution;
   Step (c)
   a step of coating release film substrates with the adhesive coating solution to form adhesive coating films;
   Step (d)
   a step of irradiating the adhesive coating films with ultraviolet rays to produce an acrylic-based polymer B having a weight average molecular weight of 350,000 to 650,000 by photopolymerization of the unreacted portion of the acrylic-based monomer in the adhesive coating films in the absence of a cross-linking agent, whereby the acrylic-based adhesive layers are formed from a cured resin composition containing the acrylic-based polymer A, the acrylic-based polymer B, and the adhesion-imparting polymer, wherein a molecular weight distribution of the cured resin composition measured by gel permeation chromatography using tetrahydrofuran as an eluent is 2.4 to 4.4; and
   Step (e)
   a step of laminating the acrylic-based adhesive layers on the release film substrates to respective sides of an electron beam cross-linked polyethylene foam substrate;

   wherein the weight average molecular weights are determined by gel permeation chromatography using tetrahydrofuran as an eluent.

2. The production method according to claim 1, wherein the polymer syrup in the step (a) has a viscosity of 200 to 5,000 cps at 25°C as measured by using a B-type viscometer, rotor no. 2.

3. The production method according to claim 1 or 2, wherein a polymerization rate of the solvent-free photopolymerizable monomer composition in the step (a) is 5 to 25%, wherein the polymerization rate is determined as follows:

   0.5 g of a polymer syrup is weighed, placed in a container reduced in pressure to 660 Pa, and left to stand at 120°C for 2 hours to volatilize volatile components;

the polymer syrup is again weighed to determine the amount of weight reduction;
the amount of weight reduction is considered to be the amount of remaining monomer and oligomers;
and the polymerization rate is determined using the following formula;

$$\text{polymerization rate \%} = [1 - (\text{amount of weight reduction} / \text{weight of adhesive before volatilization treatment})] \times 100.$$

4. The production method according to any of claims 1 to 3, wherein the solvent-free photopolymerizable monomer composition contains a (meth)acrylate optionally substituted with a hydroxy group and (meth)acrylic acid as the acrylic-based monomer.

5. The production method according to any of claims 1 to 4, wherein the solvent-free photopolymerizable monomer composition contains 2-ethylhexyl acrylate, butyl acrylate, acrylic acid, and 2-hydroxyethyl acrylate as the acrylic-based monomer.

6. The production method according to any of claims 1 to 5, wherein the solvent-free photopolymerizable monomer composition contains 0.005 to 0.1 parts by mass of the photopolymerization initiator based on 100 parts by mass of the acrylic-based monomer.

7. The production method according to any of claims 1 to 6, wherein the adhesion-imparting polymer in the step (b) is a polymer produced by photopolymerization of a cycloalkyl (meth)acrylate which is preferably cyclohexyl methacrylate, (meth)acrylic acid which is preferably methacrylic acid, a chain transfer agent which is preferably n-dodecyl mercaptan, and a photopolymerization initiator.

8. The production method according to claim 7, wherein the adhesion-imparting polymer in the step (b) is a polymer produced by photopolymerization of 95 to 97 parts by mass of cyclohexyl methacrylate, 3 to 5 parts by mass of methacrylic acid, 3 to 6 parts by mass of n-dodecyl mercaptan, and 0.25 to 0.5 parts by mass of the photopolymerization initiator.

9. The production method according to any of claims 1 to 8, wherein ultraviolet irradiation conditions in the step (b) are such that ultraviolet irradiation is performed with rays at a wavelength of 250 to 400 nm applied at a power of 15 to 100 mW/cm$^2$ for 10 to 60 seconds in an inert gas atmosphere at a temperature during the photopolymerization reaction of 25 to 130°C, and is repeated 5 to 20 times at idling intervals of 20 to 40 seconds.

10. The production method according to any of claims 1 to 9, wherein ultraviolet irradiation conditions in the step (d) are such that ultraviolet irradiation is performed with rays at a wavelength of 250 to 400 nm applied at a power of 15 to 100 mW/cm$^2$ for 10 to 60 seconds in an inert gas atmosphere at a temperature of 40 to 90°C.

**Patentansprüche**

1. Verfahren zur Herstellung eines doppelseitigen Klebebands, wobei das doppelseitige Klebeband ein Polyethylenschaumsubstrat und Haftmittelschichten auf Acrylsäurebasis, gebildet auf jeweiligen Seiten davon, einschließt, wobei das Verfahren die folgenden Schritte (a) bis (e) umfasst:

Schritt (a)
ein Schritt des Bestrahlens einer lösungsmittelfreien photopolymerisierbaren Monomerzusammensetzung, enthaltend ein Monomer auf Acrylsäurebasis und einen Photopolymerisationsinitiator, mit Ultraviolettstrahlen zum Herstellen eines Polymers auf Acrylsäurebasis A mit einem gewichtsgemittelten Molekulargewicht von 700000 bis 3000000, vorzugsweise 750000 bis 1000000, durch Photopolymerisation des Monomers auf Acrylsäurebasis in der Abwesenheit eines Vernetzungsmittels, wodurch ein Polymersirup, enthaltend das Polymer auf Acrylsäurebasis A und einen nicht umgesetzten Anteil des Monomers auf Acrylsäurebasis, hergestellt wird, wobei Ultraviolettbestrahlungsbedingungen in dem Schritt (a) derart sind, dass Ultraviolettbestrahlung mit Strahlen mit einer Wellenlänge von 250 bis 400 nm, appliziert mit einer Leistung von 15 bis 100 mW/cm$^2$ für 10 bis 60 Sekunden in einer Inertgasatmosphäre bei einer Polymerisationsstarttemperatur von 25 bis 130°C, durchgeführt wird und 5 bis 20 Mal mit Leerlaufintervallen von 20 bis 40 Sekunden wiederholt wird;

Schritt (b)
ein Schritt des Mischens eines haftkraftverleihenden Polymers mit einem gewichtsgemittelten Molekulargewicht von 2000 bis 10000 mit dem Polymersirup zum Herstellen einer Haftmittelbeschichtungslösung;
Schritt (c)
ein Schritt des Beschichtens von Abziehfilmsubstraten mit der Haftmittelbeschichtungslösung zum Bilden von Haftmittelbeschichtungsfilmen;
Schritt (d)
ein Schritt des Bestrahlens der Haftmittelbeschichtungsfilme mit Ultraviolettstrahlen zum Herstellen eines Polymers auf Acrylsäurebasis B mit einem gewichtsgemittelten Molekulargewicht von 350000 bis 650000 durch Photopolymerisation des nicht umgesetzten Anteils des Monomers auf Acrylsäurebasis in den Haftmittelbeschichtungsfilmen in der Abwesenheit eines Vernetzungsmittels, wodurch die Haftmittelschichten auf Acrylsäurebasis aus einer gehärteten Harzzusammensetzung, enthaltend das Polymer auf Acrylsäurebasis A, das Polymer auf Acrylsäurebasis B und das haftkraftverleihende Polymer, gebildet werden, wobei eine Molekulargewichtsverteilung der gehärteten Harzzusammensetzung, . gemessen durch Gelpermeationschromatographie unter Verwendung von Tetrahydrofuran als ein Elutionsmittel, 2,4 bis 4,4 beträgt; und
Schritt (e)
einen Schritt des Laminierens der Haftmittelschichten auf Acrylsäurebasis auf den Abziehfilmsubstraten auf jeweilige Seiten eines elektronenstrahlvernetzten Polyethylenschaumsubstrats;

wobei die gewichtsgemittelten Molekulargewichte durch Gelpermeationschromatographie unter Verwendung von Tetrahydrofuran als ein Elutionsmittel bestimmt werden.

2. Herstellungsverfahren nach Anspruch 1, wobei das Polymersirup in dem Schritt (a) eine Viskosität von 200 bis 5000 cps bei 25°C, gemessen unter Verwendung eines Viskosimeters vom B-Typ, Rotor Nr. 2, aufweist.

3. Herstellungsverfahren nach Anspruch 1 oder 2, wobei eine Polymerisationsrate der lösungsmittelfreien photopolymerisierbaren Monomerzusammensetzung in dem Schritt (a) 5 bis 25% beträgt, wobei die Polymerisationsrate wie folgt bestimmt wird:

0,5 g eines Polymersirups werden abgewogen, in einen Behälter mit einem auf 660 Pa reduziertem Druck gegeben und bei 120°C für zwei Stunden stehengelassen, damit sich flüchtige Komponenten verflüchtigen;
das Polymersirup wird zum Bestimmen des Ausmaßes der Gewichtsreduktion erneut gewogen;
das Ausmaß der Gewichtsreduktion wird als die Menge von verbliebenem Monomer und von verbliebenen Oligomeren betrachtet;
und die Polymerisationsrate wird unter Verwendung der nachstehenden Formel bestimmt;

$$\text{Polymerisationsrate \%} = [1 - (\text{Ausmaß der Gewichtsreduktion} / \text{Gewicht des Haftmittels vor der Verflüchtigungsbehandlung})] \times 100.$$

4. Herstellungsverfahren nach einem der Ansprüche 1 bis 3, wobei die lösungsmittelfreie photopolymerisierbare Monomerzusammensetzung ein (Meth)acrylat, gegebenenfalls substituiert mit einer Hydroxylgruppe, und (Meth)acrylsäure als das Monomer auf Acrylsäurebasis enthält.

5. Herstellungsverfahren nach einem der Ansprüche 1 bis 4, wobei die lösungsmittelfreie photopolymerisierbare Monomerzusammensetzung 2-Ethylhexylacrylat, Butylacrylat, Acrylsäure und 2-Hydroxyethylacrylat als das Monomer auf Acrylsäurebasis enthält.

6. Herstellungsverfahren nach einem der Ansprüche 1 bis 5, wobei die lösungsmittelfreie photopolymerisierbare Monomerzusammensetzung 0,005 bis 0,1 Massenteile des Photopolymerisationsinitiators, bezogen auf 100 Massenteile des Monomers auf Acrylsäurebasis, enthält.

7. Herstellungsverfahren nach einem der Ansprüche 1 bis 6, wobei das haftkraftverleihende Polymer in dem Schritt (b) ein Polymer, hergestellt durch Photopolymerisation von einem Cycloalkyl(meth)acrylat, welches vorzugsweise Cyclohexylmethacrylat ist, (Meth)acrylsäure, welche vorzugsweise Methacrylsäure ist, einem Kettenübertragungsmittel, welches vorzugsweise n-Dodecylmercaptan ist, und einem Photopolymerisationsinitiator, ist.

**8.** Herstellungsverfahren nach Anspruch 7, wobei das haftkraftverleihende Polymer in dem Schritt (b) ein Polymer, hergestellt durch Photopolymerisation von 95 bis 97 Massenteilen Cyclohexylmethacrylat, 3 bis 5 Massenteilen Methacrylsäure, 3 bis 6 Massenteilen n-Dodecylmercaptan und 0,25 bis 0,5 Massenteilen des Photopolymerisationsinitiators, ist.

**9.** Herstellungsverfahren nach einem der Ansprüche 1 bis 8, wobei Ultraviolettbestrahlungsbedingungen in dem Schritt (b) derart sind, dass Ultraviolettbestrahlung mit Strahlen mit einer Wellenlänge von 250 bis 400 nm, appliziert mit einer Leistung von 15 bis 100 mW/cm$^2$ für 10 bis 60 Sekunden in einer Inertgasatmosphäre bei einer Temperatur während der Photopolymerisationsreaktion von 25 bis 130°C, durchgeführt wird und 5 bis 20 Mal mit Leerlaufintervallen von 20 bis 40 Sekunden wiederholt wird.

**10.** Herstellungsverfahren nach einem der Ansprüche 1 bis 9, wobei Ultraviolettbestrahlungsbedingungen in dem Schritt (d) derart sind, dass Ultraviolettbestrahlung mit Strahlen mit einer Wellenlänge von 250 bis 400 nm, appliziert mit einer Leistung von 15 bis 100 mW/cm$^2$ für 10 bis 60 Sekunden in einer Inertgasatmosphäre bei einer Temperatur von 40 bis 90°C, durchgeführt wird.

## Revendications

**1.** Procédé de production d'un ruban adhésif double face, le ruban adhésif double face comprenant un substrat en mousse de polyéthylène et des couches adhésives à base acrylique formées sur chaque face du substrat, le procédé comprenant les étapes (a) à (e) suivantes :

Etape (a)
étape d'irradiation d'une composition de monomère photopolymérisable sans solvant, contenant un monomère à base acrylique et un initiateur de photopolymérisation, par des rayons ultraviolets pour produire un polymère à base acrylique A ayant un poids moléculaire moyen en poids allant de 700 000 à 3 000 000, de préférence de 750 000 à 1 000 000, par photopolymérisation du monomère à base acrylique en l'absence d'agent de réticulation, où un sirop polymère contenant le polymère à base acrylique A et une partie n'ayant pas réagi du monomère à base acrylique est préparé,
où les conditions d'irradiation ultraviolette de l'étape (a) sont telles que l'irradiation ultraviolette est réalisée avec des rayons ayant une longueur d'onde allant de 250 à 400 nm, appliqués à une puissance de 15 à 100 mW/cm$^2$ pendant 10 à 60 secondes dans une atmosphère de gaz inerte à une température de début de polymérisation allant de 25 à 130°C, laquelle est répétée 5 à 20 fois à intervalles de 20 à 40 secondes ;
Etape (b)
étape de mélange d'un polymère conférant l'adhésion, ayant un poids moléculaire moyen en poids allant de 2000 à 10 000 avec le sirop polymère pour préparer une solution de revêtement adhésif ;
Etape (c)
étape de revêtement de substrats de film anti-adhésif par la solution de revêtement adhésif afin de former des films de revêtement adhésif ;
Etape (d)
étape d'irradiation des films de revêtement adhésif par des rayons ultraviolets pour produire un polymère à base acrylique B ayant un poids moléculaire moyen en poids allant de 350 000 à 650 000, par photopolymérisation de la partie n'ayant pas réagi du monomère à base acrylique dans les films de revêtement adhésif en l'absence d'agent de réticulation, où les couches adhésives à base acrylique sont formées à partir d'une composition de résine réticulée contenant le polymère à base acrylique A, le polymère à base acrylique B et le polymère conférant l'adhésion, où la distribution de poids moléculaire de la composition de résine réticulée, mesurée par chromatographie par perméation du gel en utilisant du tétrahydrofuranne comme éluant, se situe dans l'intervalle allant de 2,4 à 4,4 ; et
Etape (e)
étape de stratification des couches adhésives à base acrylique sur les substrats de film anti-adhésif sur les faces d'un substrat en mousse de polyéthylène réticulé par faisceau électronique ;

où les poids moléculaires moyens en poids sont déterminés par chromatographie par perméation du gel en utilisant du tétrahydrofuranne comme éluant.

**2.** Procédé de production selon la revendication 1, où le sirop polymère de l'étape (a) présente une viscosité située dans l'intervalle allant de 200 à 5000 cPs à 25°C, mesurée en utilisant un viscosimètre de type B, rotor N°2.

**3.** Procédé de production selon la revendication 1 ou 2, où le taux de polymérisation de la composition de monomère photopolymérisable sans solvant à l'étape (a) se situe dans l'intervalle allant de 5 à 25%, le taux de polymérisation étant déterminé comme suit :

on pèse 0,5 g du sirop polymère, on le place dans récipient sous une pression réduite à 660 Pa, et on laisse au repos à 120°C pendant 2 heures pour volatiliser les composants volatils ;
on pèse à nouveau le sirop polymère afin de déterminer la quantité de réduction pondérale ;
on considère que la quantité de réduction pondérale est la quantité de monomères et d'oligomères résiduels ;
le taux de polymérisation est déterminé par la formule suivante :

$$\% \text{ de taux de polymérisation} = [1-(\text{la quantité de réduction pondérale/poids d'adhésif avant le traitement de volatilisation})] \times 100$$

**4.** Procédé de production selon l'une quelconque des revendications 1 à 3, où la composition de monomère photopolymérisable sans solvant contient un (méth)acrylate optionnellement substitué par un groupe hydroxy et un acide (méth)acrylique comme monomère à base acrylique.

**5.** Procédé de production selon l'une quelconque des revendications 1 à 4, où la composition de monomère photopolymérisable sans solvant contient un acrylate de 2-éthylhexyle, un acrylate de butyle, un acide acrylique, et un acrylate de 2-hydroxyéthyle comme monomère à base acrylique.

**6.** Procédé de production selon l'une quelconque des revendications 1 à 5, où la composition de monomère photopolymérisable sans solvant contient 0,005 à 0,1 partie en masse d'initiateur de photopolymérisation, sur base de 100 parties en masse de monomère à base acrylique.

**7.** Procédé de production selon l'une quelconque des revendications 1 à 6, où le polymère conférant l'adhésion de l'étape (b) est un polymère produit par photopolymérisation d'un (méth)acrylate de cycloalkyle, qui est de préférence le méthacrylate de cyclohexyle, d'un acide (méth)acrylique, qui est de préférence l'acide méthacrylique, d'un agent de transfert de chaine, qui est de préférence le n-dodécylmercaptan, et d'un initiateur de photopolymérisation.

**8.** Procédé de production selon la revendication 7, où le polymère conférant l'adhésion de l'étape (b) est un polymère produit par photopolymérisation de 95 à 97 parties en masse de méthacrylate de cyclohexyle, 3 à 5 parties en masse d'acide méthacrylique, 3 à 6 parties en masse de n-dodécylmercaptan, et 0,25 à 0,5 partie en masse de l'initiateur de photopolymérisation.

**9.** Procédé de production selon l'une quelconque des revendications 1 à 8, où les conditions d'irradiation ultraviolette de l'étape (b) sont telles que l'irradiation ultraviolette est réalisée avec des rayons ayant une longueur d'onde allant de 250 à 400 nm, appliqués à une puissance de 15 à 100 mW/cm$^2$ pendant 10 à 60 secondes dans une atmosphère de gaz inerte à une température pendant la réaction de polymérisation allant de 25 à 130°C, laquelle est répétée 5 à 20 fois à intervalles de 20 à 40 secondes.

**10.** Procédé de production selon l'une quelconque des revendications 1 à 9, où les conditions d'irradiation ultraviolette de l'étape (d) sont telles que l'irradiation ultraviolette est réalisée avec des rayons ayant une longueur d'onde allant de 250 à 400 nm, appliqués à une puissance de 15 à 100 mW/cm$^2$ pendant 10 à 60 secondes dans une atmosphère de gaz inerte à une température allant de 40 à 90°C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003049130 A
- JP HEI649418 B
- US 2009229733 A1
- JP 2010260880 A